# EUROPÄISCHE PATENTANMELDUNG

(11) **EP 1 142 664 A2**
(43) Veröffentlichungstag der Anmeldung: **10.10.2001**
(21) Anmeldenummer: 01108381.3
(22) Anmeldetag: 03.04.2001
(51) Int. Cl.: B23K 9/067

(54) **Verfahren zur Steuerung des Zündablaufs beim Lichtbogenschweissen**

(30) Priorität: 03.04.2000 DE 10016252
(71) Anmelder: Rehm GmbH & Co., Schweisstechnik, 73066 Uhingen (DE)
(72) Erfinder: Kuder, Armin, 73117 Wangen (DE); Netz, Thomas, 73252 Lenningen Hochwang (DE); Maciaszczyk, Florian, 73037 Göppingen (DE)
(74) Vertreter: Aldag, Wolfgang, Dipl.-Ing.

(57) **Zusammenfassung**

Die Erfindung betrifft ein Verfahren zur Steuerung des Zündablaufs beim Lichtbogen-Handschweißen mit einem Schweißgerät (1) mit abschmelzender Elektrode (3), bei dem der Zündablauf in folgenden Schritten durchgeführt wird. Beim manuellen Aufsetzen der Elektrode (3) auf ein Werkstück (4) wird die von der Schweißstromquelle (2) abgebbare Leistung auf ein vorgegebenes Minimum reduziert. Nach einer voreingestellten Einprellzeit wird die Leistung auf einen vorgegebenen Wert begrenzt und die eigentliche Leistung wird erst dann zugeschaltet, wenn ein vorgegebener Abstand zum Werkstück (4) erreicht ist. Beim Abheben der Elektrode (3) vom Werkstück (4) in einem vorgegebenen Abstand der Elektrode (3) zum Werkstück (4) wird dann eine um einen zusätzlichen Betrag erhöhte Leistung für eine vorgegebene Zeitspanne abgegeben, wobei der Abstand der Elektrode (3) vom Werkstück (4) mittels der detektierten Spannung über dem Lichtbogen bestimmt werden kann.

## Beschreibung

### Stand der Technik

Die Erfindung betrifft ein Verfahren zur Steuerung des Zündablaufs beim Lichtbogenschweißen, insbesondere beim Lichtbogenhandschweoßen, mit einer abschmelzenden Elektrode nach der Gattung des Verfahrensanspruches.

Beim sogenannte Lichtbogenhandschweißen, auch Elektroden-Lichtbogenschweißen genannt, wie es z.B. in dem Fachbuch R. Killing, Handbuch der Schweißverfahren, Teil 1: Lichtbogenschweißverfahren, DVS Verlag GmbH, 1991, Seiten 48 - 56 beschrieben ist, brennt ein Lichtbogen zwischen der abschmelzenden Elektrode und einem Werkstück. Ein Schutz gegen die Atmosphäre erfolgt bei diesem an sich bekannten Schweißverfahren durch die Schlacken und/oder ein Schutzgas, das von der Elektrode, beispielsweise der Elektrodenumhüllung, selbst stammt. Bei diesem Schweißverfahren kommt es insbesondere darauf an, dass ein Festkleben der Elektrode auf dem Werkstück vermieden werden soll. Insbesondere verhalten sich hier neue Elektroden anders als bereits teilweise abgebrannte. Es ist außerdem ein Unterschied zwischen verschiedenen Elektrodentypen zu beachten.

Es ist andererseits aus der DE 40 32 618 A1 für sich gesehen bekannt, dass beim sog. MIG- oder MAG-Schweißen nach dem Lift-Arc-Prinzip die Drahtelektrode maschinell auf das Werkstück bis zur Berührung zubewegt wird und zur Zündung eines Start-Lichtbogens aus einer Hilfsstromquelle mit geringer Stromstärke zurückgezogen und wieder vorwärtsbewegt wird, während die Drahtelektrode von einem Schweißlichtbogen hoher Leistung abgeschmolzen wird. Hierbei handelt es sich um ein Verfahren mit einer beim Schweißen mittels einer Vorschubeinheit kontinuierlich zugeführten Drahtelektrode wobei der Startlichtbogen aus einer separaten Hilfsstromquelle versorgt werden muss.

Weiterhin ist für sich gesehen auch bekannt, dass beim Lichtbogenschweißen beim Startprozess ein höherer Stromwert als der voreingestellte für eine definierte Zeit verwendet wird, um die schnelle Stabilisierung des Lichtbogens zu erreichen. Diese Überhöhung beim Startprozess ist auch als Zündüberhöhung oder Hotstart bekannt.

### Aufgabenstellung

Der Erfindung liegt die Aufgabe zugrunde, ein Schweißverfahren der eingangs genannten Art derart zu verbessern, dass bei hoher Qualität der Schweißnaht ein sicherer Zündprozess für einen stabilen Lichtbogen und zur Vermeidung von Schweißfehlern gewährleistet ist.

### Vorteile der Erfindung

Das Schweißverfahren der eingangs genannten Art wird mit den Merkmalen des Kennzeichens des Anspruchs 1 in vorteilhafter Weise weitergebildet, wobei insbesondere ein Festkleben der Elektrodenspitze am Werkstück vermeidbar wird.

Das Verfahren zur Steuerung des Zündablaufs beim Lichtbogenschweißen mit einem Schweißgerät mit abschmelzender Elektrode, ist in vorteilhafter Weise so gestaltet, dass erfindungsgemäß bei einem Lichtbogenhandschweißverfahren beim Aufsetzen der Elektrode auf ein Werkstück die vom Schweißgerät abgebbare Leistung auf ein vorgegebenes Minimum reduziert wird. Nach einer vorgegebenen Einprellzeit von beispielsweise 50 ms kann bei einer vorteilhaften Ausführungsform der Schweißstrom auf eine vorgegebene Leistung von z. B. 200 W begrenzt werden und die eigentliche Zündüberhöhung wird erfindungsgemäß erst dann zugeschaltet, wenn ein vorgegebener Abstand zum Werkstück erreicht ist. Maßgeblich für die Bemessung dieser Werte ist, dass ein sicheres Zünden gewährleistet und ein Festkleben der Elektrode verhindert ist.

In vorteilhafter Weise wird gemäß der Erfindung beim Abheben der Elektrode vom Werkstück in einem vorgegebenen Abstand der Elektrode zum Werkstück der Spannungsanstieg detektiert. Entsprechend in etwa einer ständigen Spannungserhöhung um ca. 5 V, wird ein um einen zusätzlichen Betrag, beispielsweise + 50%, erhöhter Schweißstrom für eine vorgegebene Zeitspanne von z.B. 100 ms abgegeben. Der Abstand der Elektrode vom Werkstück kann dabei mittels der detektierten Spannung über dem Lichtbogen, die durch abscannen der Spannung an der Elektrode erfasst wird, bestimmt.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Die Erfindung wird anhand einer Figur erläutert, die schematisch einen Aufbau eines Elektroden-Schweißgeräts 1 mit einer Schweißstromquelle 2 für ein Lichtbogenhandschweißverfahren zeigt. An einem Pol der Schweißstromquelle 2 ist eine Elektrode 3 und am anderen Pol ist ein Werkstück 4 angeschlossen. Der Schweißstrom Iₛ wird auf die Elektrode 3 geführt, so dass zwischen der Elektrode 3 und dem Werkstück 4 ein Lichtbogen 5 entsteht. Die Spannung zwischen der Elektrode und dem Werkstück 4 wird abgescannt, was hier symbolisch durch ein Messgerät 6 gezeigt ist.

Der Zündablauf für den Lichtbogen 5 wird wie folgt durchgeführt. Um ein Festkleben der Spitze der Elektrode 3 zu vermeiden wird die abgebbare Leistung der Schweißstromquelle 2 im Moment des Aufsetzens der Elektrode 3 auf das Werkstück 4 auf ein Minimum reduziert. Nach einer Entprellzeit von 50 ms wird die Leistung an der Elektrode 3 auf ca. 200 W begrenzt. Der Betrag von ca. 200 W kann bei einer bestimmten Ausführungsform vorteilhaft sein, weil eine geringere Leistung beim manuellen Abheben nicht für das Aufrechteerhalten des Lichtbogens langen würde und eine größere Leistung könnte eventuell die Gefahr des Festklebens der Elektrode 3 bergen. Wenn ein genügend großer Abstand zum Werkstück 4 erreicht wird, erfolgt die Umschaltung auf den Zündstrom, d.h. auf einen höheren Stromwert als den voreingestellten.

Hier wird somit die Bewegung der Elektrode 3 vom Werkstück 4 weg detektiert, was durch das abscannen der Spannung an der Elektrode 3 erreicht wird. Wird die Spannung kleiner, so bewegt der Schweißer den Elektrodenstab 3 zum Werkstück 4. Bewegt der Schweißer die Elektrode 3 vom Werkstück 4 weg, so steigt die Spannung an. Wird nun die Spannung um eine Differenz von beispielsweise 5 V ständig größer, dann wird nach einer Zeit von 10 ms der eingestellte Strom Iₛ um ca. 50 % über den mit einem Potentiometer eingestellten Wert erhöht.

Dieser 1,5fache Strom Iₛ wird beispielsweise für eine Zeit von 100 ms angelegt um eine schnellere Aufwärmung der Elektrode 3 und einen stabileren Lichtbogen zu erreichen. Danach wird der Strom Iₛ, wie z.B. mit einem Sollwertpotentiometer an der Schweißstromquelle 2 definiert, ausgegeben.

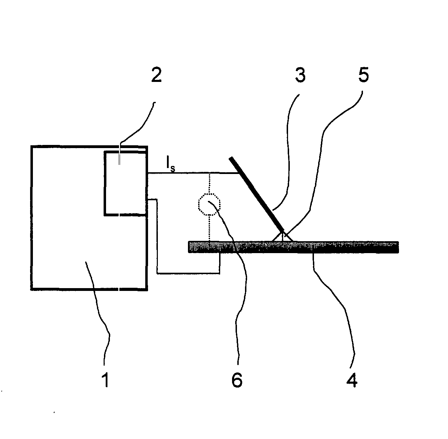

## Patentansprüche

1. Verfahren zur Steuerung des Zündablaufs beim Lichtbogenschweißen mit einem Schweißgerät (1) mit abschmelzender Elektrode (3), **dadurch gekennzeichnet, dass** der Zündablauf bei einem Lichtbogenhandschweißverfahren in folgenden Schritten durchgeführt wird:
- beim manuellen Aufsetzen der Elektrode (3) auf ein Werkstück (4) wird die von der Schweißstromquelle (2) abgebbare Leistung auf ein vorgegebenes Minimum reduziert,
- nach einer vorgegebenen Einprellzeit wird die Leistung auf einen voreingestellten Wert begrenzt,
- eine Zündüberhöhung wird dann zugeschaltet, wenn ein vorgegebener Abstand zum Werkstück (4) erreicht ist.

2. Verfahren nach Anspruch 1, **dadurch gekennzeichnet, dass**
- beim Abheben der Elektrode (3) vom Werkstück (4) in einem vorgegebenen Abstand der Elektrode (4) zum Werkstück (4) eine um einen zusätzlichen Betrag erhöhte Leistung für eine vorgegebene Zeitspanne abgegeben wird.

3. Verfahren nach Anspruch 1 oder 2, **dadurch gekennzeichnet, dass**
- der Abstand der Elektrode (3) vom Werkstück (4) mittels der detektierten Spannung über dem Lichtbogen (5) bestimmt wird.
